# NEUE EUROPÄISCHE PATENTSCHRIFT

(11) **EP 1 743 162 B2**
(45) Veröffentlichungstag und Bekanntmachung des Hinweises auf die Entscheidung über den Einspruch: **23.10.2019**
(45) Hinweis auf die Patenterteilung: 28.04.2010
(21) Anmeldenummer: 05738158.4
(22) Anmeldetag: 18.04.2005
(51) Int. Cl.: G01N 21/03

(54) **VORRICHTUNG FÜR DIE ANALYSE ODER ABSORPTIONSMESSUNG AN EINER KLEINEN MENGE EINES FLÜSSIGEN MEDIUMS MIT HILFE VON LICHT**
DEVICE FOR THE ANALYSIS OR ABSORPTION MEASUREMENT OF A SMALL QUANTITY OF A LIQUID MEDIUM BY MEANS OF LIGHT
DISPOSITIF POUR L'ANALYSE OU LA MESURE D'ABSORPTION CONCERNANT UNE PETITE QUANTITE DE SUBSTANCE LIQUIDE A L'AIDE DE LUMIERE

(30) Priorität: 07.05.2004 DE 102004023178
(43) Veröffentlichungstag der Anmeldung: 17.01.2007
(73) Patentinhaber: Hellma GmbH & Co. KG, 79379 Müllheim (DE); Sahiri, Thomas, Calabasas, CA 91302 (US)
(72) Erfinder: KÄNDLER, Holm, 79424 Auggen (DE)
(74) Vertreter: Hoffmann Eitle
(86) Internationale Anmeldenummer: PCT/EP2005/004083
(87) Internationale Veröffentlichungsnummer: WO 2005/114146

(56) Entgegenhaltungen:
- EP-A- 0 660 106
- DE-A1- 3 344 387
- US-A- 3 392 623
- US-A- 5 185 834
- US-A1- 2002 110 496
- US-A1- 2004 086 215

## Beschreibung

Die Erfindung betrifft eine Vorrichtung für die Analyse oder Absorptionsmessung an einer kleinen Menge, beispielsweise an einem Tropfen, eines flüssigem Mediums mit Hilfe von Licht, das durch das Medium geführt ist und danach fotometrisch, spektralfotometrisch, fluorimetrisch oder spektralfluorimetrisch detektierbar oder analysierbar ist, wobei die Vorrichtung eine in Gebrauchsstellung obere flächige Aufnahmestelle zum Aufbringen oder Auftropfen des Mediums, einen in Gebrauchsstellung horizontal orientierten, unterhalb der Aufnahmestelle befindlichen Lichteintritt in ihr Gehäuse und eine im Strahlengang hinter dem Lichteintritt befindliche erste Einrichtung zur Umlenkung des Lichts nach oben zu der Aufnahmestelle aufweist.

In vielen Fällen stehen von flüssigen Proben nur geringe Mengen zur Verfügung. Dies gilt vor allem in der biochemischen, medizinischen oder pharmazeutischen Analytik. Bei systematischen Reihenuntersuchungen mit einer Vielzahl ähnlicher Proben kommen beispielsweise Titrationsplatten als Probenbehälter zum Einsatz, die eine effiziente sequenzielle oder parallele Auswertung erlauben.

Für Einzelmessungen bei qualitativ sehr unterschiedlichen Substanzen und insbesondere bei Absorptionsmessungen werden solche Proben in bekannter Weise in Küvetten gefüllt und dann analysiert.

Bei Küvetten mit einem Messkammervolumen von zehn Mikroliter und darunter - also etwa Tropfengröße - ist es aufgrund der geringen Substanzmenge schwierig, die Probe des flüssigen Mediums in den Messkanal einzubringen, da geeignete Küvetten nur über kleine Zugangsöffnungen verfügen und der Messkanal einen entsprechend kleinen Querschnitt hat. Beim Einbringen einer Probe des zu untersuchenden Mediums in den Messkanal muss sichergestellt werden, dass dieser von dem Medium vollständig ausgefüllt wird und sich beispielsweise keine Blasen innerhalb des von dem Messstrahl durchsetzten Volumens des flüssigen Mediums befinden, da Blasen das Messergebnis erheblich verfälschen können.

In der Regel werden deshalb Küvetten zunächst außerhalb eines entsprechenden Messgeräts befüllt und die Güte der Befüllung visuell geprüft. Danach wird die Küvette in den Küvettenhalter eines Messgeräts eingesetzt. Dabei muss die Küvette so im Messstrahl positioniert werden, dass durch die Blendenwirkung des Messkammerquerschnitts keine Schwankungen des der Küvette selbst zugehörenden Absorptionsniveaus zustande kommen, weil auch durch derartige Schwankungen das Messergebnis verfälscht werden könnte. Dies kann passieren, weil der Strahlquerschnitt eins als Messgerät dienenden Spektralfotometers in der Regel die freie Appertur von der erwähnten Küvette mit kleinsten Probenvolumina überschreitet. Selbst geringe Abweichungen in der Positionierung in der Küvette im Vergleich zu einer Referenzmessung oder durch Verwenden von mehreren zwar baugleichen, aber Fertigungsschwankungen unterliegenden Küvetten innerhalb eines Messzyklus können zu Messwertabweichungen führen. Nach der Messung ist es aufgrund der Gestaltung der Küvettenhalter in handelsüblichen Messgeräten praktisch unvermeidlich, die Küvetten zum Entleeren und Reinigen aus dem Halter zu entnehmen.

Aus DE 33 44 387 A1 ist ein Fotometerkopf für kleine Messvolumina bekannt, bei welchem ein Paar von Lichtsender und Lichtempfänger in einem Materialblock angeordnet ist und dieser Materialblock im Bereich der einander zugewandten Flächen von Lichtsender und Lichtempfänger eine Ausnehmung hat, die mit einer Platte abgedeckt ist. Diese Platte weist eine Bohrung auf, durch die eine Applikationseinrichtung in den Abstand zwischen den einander zugewandten Flächen von Lichtsender und Lichtempfänger herangeführt werden kann. Dadurch soll die Verwendung einer Küvette vermieden werden. Der Tropfen des zu untersuchenden flüssigen Mediums ist in den Abstand einzubringen und muss darin trotz der darauf wirkenden Schwerkraft gehalten werden. Somit muss die Applikation eines Probe-Tropfens mit großer Sorgfalt durchgeführt werden, damit dieser trotz der Schwerkraft in dem nach unten offenen Abstand zwischen den Flächen festgehalten wird, was im Übrigen auch eine entsprechende Konsistenz des zu untersuchenden Mediums verlangt.

Es besteht deshalb die Aufgabe, eine Vorrichtung der eingangs genannten Art zu schaffen, bei welcher eine kleine Probemenge eines flüssigen Mediums auf einfache Weise an einer Messstelle platziert werden kann und die nach der Messung eine zuverlässige und einfache Reinigung ermöglicht. Ferner soll eine Referenzmessung möglich sein, ohne dass sich die Messbedingungen zwischen Referenzmessung und Probemessung für das Messergebnis nachteilig verändern können.

US 2002/0110496 A1 betrifft einen Probenhalter (sample tab) zur Aufnahme einer Probe bei der Analyse.

US 3,392,623 betrifft eine Vorrichtung zur Messung der Lichtabsorption von Proben.

EP 0 660 106 A1 betrifft eine Vorrichtung mit einem Spektralphotometer und Lichtleitern.

Die genannte Aufgabe wird mit einer Vorrichtung mit den Merkmalen des Anspruchs 1 gelöst.

Bei dieser Vorrichtung kann also das zu untersuchende Medium auch in sehr kleiner Menge auf eine im Wesentlichen horizontale Fläche aufgebracht oder aufgetropft werden, wobei diese Aufnahmestelle von dem Licht dann zumindest einmal durchflossen wird. Dies kann auf dem Weg zu dem Reflektor oder von dem Reflektor der Fall sein, wobei sich jedoch in vorteilhafter Weise eine entsprechend große Messstrecke ergibt, wenn das Licht sowohl auf seinem Weg zu dem Reflektor als auch von diesem Reflektor kommend durch die Probe geleitet wird.

Da das Medium auf eine obere flächige Aufnahmestelle aufgetragen werden kann, bedarf es keiner besonderen Sorgfalt und keiner besonderen Vorkehrungen, um negative Auswirkungen der Schwerkraft zu vermeiden. Vielmehr hilft die Schwerkraft sogar mit, das Medium in seiner Lage zu halten, in welcher die Messung erfolgen soll. Auch ein aufwendiges Einfüllen in einen Messkanal kann auf diese Weise vermieden werden. Es genügt, den lösbaren Reflektor abzunehmen, die Probe auf die Aufnahme- oder Messstelle aufzutragen und den Reflektor in seine Gebrauchsstellung zu bringen, um dann die Messung durchführen zu können. Somit eignet sich die Vorrichtung auch für eine effektive Durchführung von Einzelmessungen an kleinen und kleinsten Mengen des zu untersuchenden Mediums. Ferner sind für all diese Messungen übereinstimmende Messbedingungen gegeben, so dass es keine nachteiligen Veränderungen zwischen Referenzmessung und Probenmessung gibt. Das Auftropfen einer Probe beispielsweise mittels einer Pipette ist dabei ein äußerst einfach durchführbarer Vorgang.

In zweckmäßiger Weise kann also die Aufnahmestelle als Fläche von oben zugänglich sein und das zu untersuchende Medium kann durch die Schwerkraft auf der Aufnahmestelle festlegbar oder gehalten sein.

Zweckmäßig ist es dabei, wenn die Aufnahmestelle so groß bemessen ist, dass das durch sie hindurch zu dem Reflektor verlaufende und von diesem zurückgeworfene Licht wenigstens einmal, insbesondere zweimal durch die Aufnahmestelle und/oder durch das Medium geführt ist. In letzterem Falle ergibt sich eine Messstrecke die dem doppeltem Abstand der Aufnahmestelle von dem Reflektor entspricht, was eine wirkungsvolle Messung und Untersuchung erlaubt.

Eine Ausgestaltung von vorteilhafter Bedeutung kann darin bestehen, dass von der ersten Einrichtung zur Umlenkung des Lichts zu der Aufnahmestelle hin ein Lichtleiter oder lichtleitendes Faserbündel und insbesondere zwischen der Aufnahmestelle und der zweiten Einrichtung zum Umlenken des von dem Reflektor und der Probe kommenden Lichts ein Lichtleiter oder ein das Licht leitendes Faserbündel angeordnet sind. Auf diese Weise kann die von dem Licht beaufschlagte Aufnahmestelle oder der an der Aufnahmestelle wirksame Messfleck klein gehalten werden, was gleichzeitig eine bestmögliche Ausnutzung des Lichts bedeutet. Dies gilt selbst dann, wenn das Licht die zu messende Probe zweimal durchläuft, nämlich auf seinem Weg zu dem Reflektor und auf seinem Weg von dem Reflektor zurück. Mit Hilfe der erwähnten Lichtleiter oder lichtleitenden Faserbündel lassen sich die Lichtstrahlen auf engsten Raum konzentrieren.

Dabei kann die gezielte Leitung des Lichts dadurch verbessert werden, dass unterhalb der Aufnahmestelle für das Medium eine das Licht bündelnde Optik, zumindest eine Sammellinse, vorgesehen ist, die mit dem/den Lichtleitern optisch gekoppelt ist. Eine derartige Optik kann sowohl mit dem von der ersten Einrichtung zur Umlenkung des Lichts kommenden Lichtleiter als auch mit dem Lichtleiter kombiniert sein, der zu der zweiten Einrichtung zur Umlenkung des Lichts führt. Es ist aber auch möglich, eine gemeinsame Optik für die beiden an ihren Enden nah beieinander befindlichen Lichtleiter oder Faserbündel vorzusehen.

Eine besonders vorteilhafte Ausgestaltung der Erfindung zur Begrenzung der seitlichen Ausdehnung der Aufnahmestelle und damit zur weiteren Verminderung der notwendigen Mängel des zu untersuchenden Mediums kann darin bestehen, dass die Aufnahmestelle eine flächige Vertiefung an der Oberseite der Vorrichtung unterhalb des Reflektors ist und insbesondere durch die der Aufnahmestelle zugewandte Begrenzung der Optik oder Linse oder durch die dort endenden Lichtleiter gebildet ist, wobei die Linse oder Optik und/oder die Enden der Lichtleiter gegenüber der Oberseite der Halterung für die Linse oder Optik oder die Lichtleiter zurückversetzt sind. Bei einer bevorzugten Ausführungsform kann also die Aufnahmestelle dadurch nach den Seiten hin begrenzt sein, dass sie eine Vertiefung ist beziehungsweise in einer Vertiefung angeordnet ist, die bevorzugt dadurch gebildet sein kann, dass die Optik oder Linse oder die Enden der Lichtleiter gegenüber der obersten Begrenzung oder Fläche ihre Halterung etwas vertieft angeordnet oder versetzt sind, so dass auf diese Weise die entsprechende Vertiefung automatisch gebildet ist.

Zweckmäßig ist es dabei, wenn die mit den Lichtleitern - zumindest optisch - gekoppelte Linse oder Optik gleichzeitig als Abschlussfenster der Vorrichtung ausgebildet ist, auf welches die zu untersuchende Probe des Mediums auftropfbar ist. Aus diesen Merkmalen und Möglichkeiten ergibt sich also eine sehr einfach bedienbare Vorrichtung, auf die eine sehr geringe Menge eines Mediums durch Auftropfen aufgetragen werden kann, was eine sehr einfache Bedienbarkeit ergibt. Dennoch kann diese Probe auch sehr effektiv von Licht durchflossen werden, das auf einfache Weise gemessen oder detektiert werden kann.

Der Reflektor kann ein Spiegel oder ein reflektierendes Prisma sein und kann die Probe in Gebrauchsstellung abstandslos berühren. Entsprechend effektiv wird die Probe von dem Licht durchstrahlt und von dem Reflektor zurückgelenkt, um über die zweite Einrichtung zur Umlenkung zu dem eigentlichen Detektor zu gelangen. Die Messstrecke durch die Probe kann dabei doppelt so groß wie der Abstand der Aufnahmefläche von der Oberfläche des Reflektors sein und das Licht kann diesen Abstand zweimal durchlaufen, wie vorstehend schon erwähnt.

Für eine gleichbleibende Genauigkeit der Messungen und für die Vermeidung von Veränderungen der Messbedingungen zwischen den einzelnen Messungen sowie gegenüber Referenzmessungen ist es besonders zweckmäßig, wenn der lösbar aufsetzbare oder anbringbare Reflektor gegenüber der Vorrichtung und ihrem Gehäuse in Gebrauchsstellung drehfest gehalten und zentriert ist. Dadurch wird sichergestellt, dass er immer in der selben Position relativ zu der Vorrichtung und ihrem Gehäuse und somit auch zu der Aufnahmestelle angebracht wird, nachdem eine Probe aufgetragen wurde. Entsprechend übereinstimmend sind die jeweiligen Reflektionsbedingungen. Dabei sind unterschiedliche konstruktive Möglichkeiten vorhanden, die Drehfestigkeit sicherzustellen, obwohl der Reflektor aus seiner Gebrauchslage abgenommen werden kann.

Damit der Reflektor in Gebrauchsstellung in wiederholbarer Weise den vorgegebenen Abstand zu der Aufnahmestelle erhält, kann dieser Abstand durch wenigstens einen Abstandhalter zwischen Reflektor und Gehäuse oder einen Anschlag festgelegt sein. Somit besteht für einen Benutzer nicht die Notwendigkeit, beim Aufsetzen des Reflektors auf die Vorrichtung in seine Gebrauchslage Vorkehrungen für die Einhaltung des vorgegebenen Abstands zu treffen. Auch die Ausbildung des Abstandhalters oder eines Anschlages kann auf unterschiedliche Weise konstruktiv gelöst sein. Dabei ist unter Umständen sogar denkbar, dass der Abstandhalter und die Halterung für die Drehfestigkeit des Reflektors miteinander kombiniert sind.

Zwar kann die Einstrahlung von Licht an der Vorrichtung beliebig erfolgen und auch die Detektion kann in geeigneter Weise mit dem Lichtaustritt aus der Vorrichtung zusammenwirken, wobei beliebige Messvorrichtungen verwendbar sind.

Besonders zweckmäßig ist es jedoch, wenn die Vorrichtung die Außenabmessung einer in ein Fotometer, Spektralfotometer, Fluorimeter oder Spektralfluorimeter passend einsetzbaren, von deren Licht beaufschlagbaren Küvette aufweist und wenn die in dem Inneren der Vorrichtung angeordneten Einrichtungen zur Lichtzuleitung oder Lichtumlenkung an der Stelle der Vorrichtung angeordnet sind, an welcher bei üblichen Küvetten Eintritts- und Austrittsfenster für das zur Messung dienende Licht vorgesehen sind, wobei die erste Einrichtung zur Lichtumlenkung das von dem Fotometer eingestrahlte Licht zu der Aufnahmefläche umlenkt und die zweite Einrichtung zur Lichtumlenkung das von der Messstelle zurückkommende Licht zu dem Detektor umlenkt. Durch eine geschickte Wahl der Abmessungen der erfindungsgemäßen Vorrichtung kann diese also in die gängigen Fotometer, Spektralfotometer, Fluorimeter oder Spektralfluorimeter eingesetzt werden, um dort zur Messung auch mengenmäßig sehr kleiner Proben eines Mediums dienen zu können. Dies vermindert vor allem die Investitions- und Installationskosten beträchtlich.

Günstig ist es, wenn die Vorrichtung aus Glas oder Kunststoff besteht und im Bereich des Lichteintritts als erste Einrichtung zur Umlenkung ein Umlenkprisma oder einen Umlenkspiegel zu einem rechtwinklig zum Lichteintritt stehenden Schacht oder Kanal für einen Lichtleiter oder ein lichtleitendes Faserbündel und parallel dazu den weiteren Lichtleiter mit einem an dessen Mündung zugeordneten zweiten Umlenkprisma oder Umlenkspiegel hat, welchem ein Austrittsfenster für das Licht gegenüberliegt oder dieses Fenster bildet.

Lichteintritt und Lichtaustritt entsprechen auf diese Weise denen einer handelsüblichen Küvette, so dass die Zuleitung des Lichts und auch dessen Detektion nach dem Durchstrahlen der Probe sehr einfach vor allem in entsprechenden schon existierenden Messvorrichtungen durchgeführt werden kann.

Beispielsweise kann das Außenmaß des Querschnitts der Vorrichtung dem einer Standardküvette entsprechen und insbesondere 12,5 Millimeter mal 12,5 Millimeter betragen.

Es sei noch erwähnt, dass der aus der Vorrichtung wieder austretende Lichtstrahl mit dem eintretenden Lichtstrahl fluchten oder mit diesem einen rechten Winkel einschließen kann. Letzteres ist vor allem bei Fluorimetern oder Spektralfluorimetern zweckmäßig.

Vor allem bei Kombination einzelner oder mehrerer der vorbeschriebenen Merkmale und Maßnahmen ergibt sich eine eingangs definierte Vorrichtung, die eine einfache Handhabung und eine Untersuchung auch sehr kleiner Mengen eines flüssigen Mediums erlaubt unabhängig von dessen Viskosität. Auch Medien relativ hoher Viskosität können gut untersucht werden, da sie problemlos auf der im Wesentlichen horizontalen Aufnahmefläche gehalten werden können. Ferner ist die Reinigung nach erfolgter Messung sehr einfach und kann beispielsweise mit Hilfe von Optik-Reinigungstüchern oder mit Tupfern durchgeführt werden. Gegebenenfalls können dabei übliche Reinigungsmittel zum Einsatz kommen. Günstig ist dabei, dass die von dem untersuchten Medium beaufschlagte Messstelle sehr einfach zugänglich ist, wobei die Vorrichtung sogar in dem Messgerät verbleiben kann.

Insgesamt ergibt sich eine Vorrichtung, die vor allem bei einer Ausbildung mit küvettenähnlichen Abmessungen in die meisten kommerziell verfügbaren Messgeräte und dabei auch in ältere Messgeräte ohne Modifikation eingesetzt werden kann. Referenzmessung, Probemessung und Reinigung können mit geringem Aufwand und ohne nennenswerten Zeitverlust zügig durchgeführt werden.

Nachstehend sind Ausführungsbeispiele der Erfindung anhand der Zeichnung näher beschrieben. Es zeigt in zum Teil schematisierter Darstellung:
Fig. 1 : einen Längsschnitt einer erfindungsgemäßen Vorrichtung mit ihrem Gehäuse, in welches ein Lichtstrahl horizontal eintritt und durch eine erste Einrichtung in vertikale Richtung nach oben umgelenkt wird, wobei eine obere flächige Aufnahmestelle zum Auftragen des zu untersuchenden Mediums vorgesehen ist über der sich ein lösbar anbringbarer Reflektor befindet, von welchem das Licht über einen zweiten Lichtleiter zu einer zweiten Einrichtung zum Umlenken des Lichts wieder aus der Vorrichtung heraus befindet, wobei die Aufnahmestelle durch eine das Licht bündelnde Optik gebildet ist,
Fig. 2 : eine der Fig.1 entsprechende Darstellung eines abgewandelten Ausführungsbeispiels, bei welchem die Lichtleiter bis an die flächige Aufnahmestelle für das zu untersuchende Medium führen,
Fig. 3 : im vergrößertem Maßstab die in Fig.1 durch einen Kreis gekennzeichnete Einzelheit bei noch abgenommenen Reflektor, nach dem eine Probe aufgetragen wurde,
Fig. 4 : eine der Fig.3 entsprechende Darstellung nach dem Anbringen des Reflektors in seiner Gebrauchslage, in welcher er die Probe abstandslos berührt und sich mit seiner der Probe zugewandten Oberfläche in einem definierten Abstand zu der Aufnahmestelle befindet, durch die das Licht verläuft,
Fig. 5 : die Anordnung einer erfindungsgemäßen Vorrichtung gemäß Fig.1 in einem an sich für Küvetten bestimmten Aufnahmeschachts eines Fotometers oder dergleichen Messgerät sowie
Fig. 6 : eine der Fig.5 entsprechende Darstellung mit einer Vorrichtung gemäß Fig.2.

In der nachfolgenden Beschreibung erhalten hinsichtlich ihrer Funktion übereinstimmende Teile der unterschiedlichen Ausführungsbeispiele auch bei etwas abgewandelter Formgebung übereinstimmende Bezugszahlen.

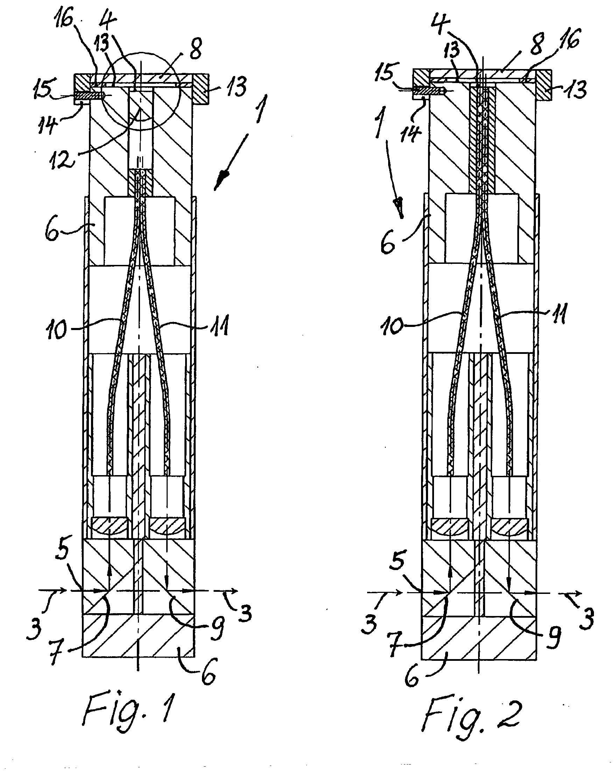

Eine im Ganzen mit 1 bezeichnete Vorrichtung, deren Gehäuse 6 und damit auch deren Gehäuseinhalt in den Fig.1, 2, 5 und 6 im Längsschnitt dargestellt sind, dient für die Analyse oder Absorptionsmessung an einer kleinen Menge, beispielsweise an einem Tropfen eines flüssigen Mediums 2 mit Hilfe von durch Pfeile 3 symbolisierten Licht. Dieses Licht wird durch das Medium 2 geführt und danach fotometrisch, spektralfotometrisch, fluorimetrisch oder spektralfluorimetrisch in an sich bekannter Weise detektiert oder analysiert.

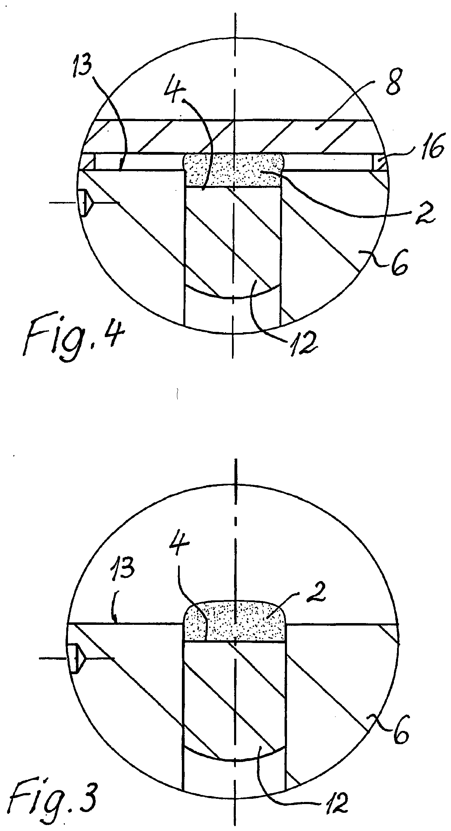

Vor allem bei gemeinsamer Betrachtung der Fig.1 bis 4 erkennt man, dass die Vorrichtung 1 eine in Gebrauchsstellung obere flächige, im wesentlichen horizontale und ebene Aufnahmestelle 4 zum Aufbringen oder Auftropfen des Mediums 2, einen in Gebrauchsstellung horizontal orientierten, unterhalb der Aufnahmestelle 4 befindlichen Lichteintritt 5 in ihr Gehäuse 6 und eine im Strahlengang hinter dem Lichteintritt 5 befindliche erste Einrichtung 7 zum Umlenken des Lichts nach oben zu der Aufnahmestelle 4 sowie einen oberhalb der Aufnahmestelle 4 lösbar anbringbaren Reflektor 8 aufweist. Dabei hat dieser Reflektor 8 in Gebrauchsstellung einen definierten Abstand von der Aufnahmestelle 4, um eine gleichbleibende präzise Messstrecke für das Licht zu ergeben. Dieser Abstand ist gemäß Fig. 4 zumindest im Bereich des Lichtdurchgangs von dem Medium 2 ausgefüllt oder ausfüllbar. Ferner weist die Vorrichtung 1 noch eine zweite Einrichtung 9 zum Umlenken des von dem Reflektor 8 kommenden Lichts zu einem Detektor auf, der in Fig.1 und 2 nicht näher dargestellt ist.

Anhand der Fig. 1 bis 3 und dabei vor allem der Fig. 3 wird deutlich, dass die Aufnahmestelle 4 als Fläche von oben zugänglich ist und das zu untersuchende Medium 2 also durch seine Schwerkraft auf dieser Aufnahmestelle 4 festlegbar und gehalten ist. Dabei ist diese Aufnahmestelle 4 so groß bemessen, dass das durch sie hindurch zu dem Reflektor 8 verlaufende und von diesem zurückgeworfene Licht 3 wenigstens einmal, in beiden Ausführungsbeispielen sogar zweimal durch die Aufnahmestelle 4 und durch das Medium 2 geführt ist. Dadurch wird erreicht, dass die Messstrecke durch die von dem Medium 2 gebildete Probe doppelt so groß wie der Abstand der Aufnahmefläche 4 von der Oberfläche des Reflektors 8 ist und das Licht diesen Abstand zweimal durchläuft. Die Messstrecke kann auf diese Weise also doppelt so groß wie der erwähnte Abstand sein.

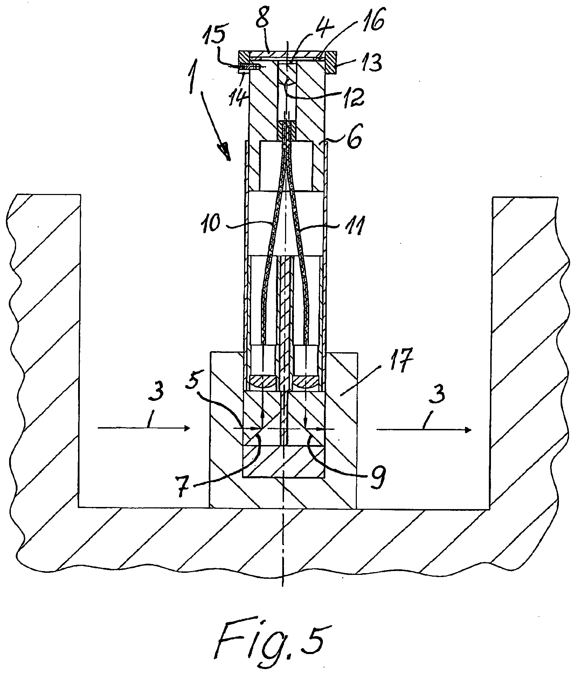

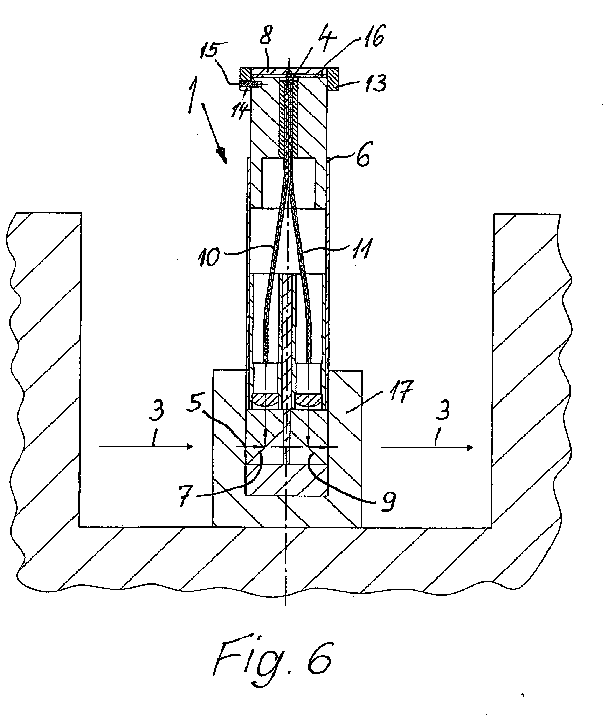

In beiden Ausführungsbeispielen gemäß Fig.1 und 5 einerseits sowie gemäß Fig.2 und Fig.6 andererseits ist vorgesehen, dass von der ersten Einrichtung 7 zur Umlenkung des Lichts zu der Aufnahmestelle 4 hin ein Lichtleiter oder lichtleitendes Faserbündel 10 und ebenso zwischen der Aufnahmestelle 4 und der zweiten Einrichtung 9 zum Umlenken des von dem Reflektor 8 und von der Probe kommenden Lichts ein Lichtleiter oder ein das Licht leitendes Faserbündel 11 angeordnet sind, damit das Licht effektiv und mit möglichst geringen Verlusten zu der Aufnahmestelle 4 und zu dem als Probe vorgesehenen Medium 2 gelangen kann.

Gemäß Fig.1, 3, 4 und 5 ist dabei unterhalb der flächigen Aufnahmestelle 4 für das Medium 2 eine das Licht bündelnde Optik 12, beispielsweise eine Sammellinse vorgesehen, die mit den Lichtleitern 10 und 11 optisch gekoppelt ist.

Beim Ausführungsbeispiel gemäß Fig.2 und 6 verlaufen die Lichtleiter 10 und 11 hingegen bis unmittelbar an die Aufnahmestelle 4.

In beiden Ausführungsbeispielen ist die Aufnahmestelle 4 eine flächige Vertiefung an der Oberseite der Vorrichtung 1 unterhalb des Reflektors 8. Im Ausführungsbeispiel gemäß Fig.1, 3 und 4 ist dabei diese Aufnahmestelle 4 durch die ihr zugewandte Begrenzung der Optik oder Linse 12 und im Ausführungsbeispiel gemäß Fig.2 durch die dort endenden Lichtleiter 10 und 11 gebildet, wobei die Linse oder Optik 12 und/oder die Enden der Lichtleiter 10, 11 gegenüber der Oberseite 13 der Halterung für die Linse oder Optik oder die Lichtleiter beziehungsweise gegenüber der Oberseite 13 des Gehäuses 6 zurückversetzt sind. Vor allem die Zurückversetzung der Optik 12 zur Bildung der etwas vertieften Aufnahmestelle 4 erkennt man besonders gut in Fig.3 und 4. Somit wird die Probe des flüssigen Mediums 2 auch nach den Seiten hin begrenzt und gehalten, wozu außerdem ihre Oberflächenspannung noch beitragen kann. Es kann also auf kleinstem Raum eine definierte kleine Menge von wenigen Mikrolitern festgelegt und mit Hilfe von Licht untersucht und detektiert werden.

In diesem Ausführungsbeispiel gemäß Fig.3 und 4 ist also die mit den Lichtleitern 10 und 11 gekoppelte Linse oder Optik 12 gleichzeitig als Abschlussfenster der Vorrichtung 1 ausgebildet, auf welches die zu untersuchende Probe des Mediums 2 auftropfbar ist. Entsprechend gut und einfach ist die Bedienung und die Zugänglichkeit sowohl beim Aufbringen der Probe als auch bei einer späteren Reinigung.

Der Reflektor 8 ist im Ausführungsbeispiel ein Spiegel, könnte aber auch ein reflektierendes Prisma sein und berührt gemäß Fig.4 die Probe in Gebrauchsstellung abstandslos.

Dabei ist dieser lösbar aufsetzbare oder anbringbare Reflektor 8 gegenüber der Vorrichtung 1 und ihrem Gehäuse 6 in Gebrauchsstellung drehfest gehalten und zentriert. Dies ist beispielsweise in Fig.1 und 2 durch einen das Gehäuse 6 übergreifenden Rand 13 an dem Reflektor 8 bewirkt, der wenigstens einen randoffenen und sich dabei nach unten öffnenden Schlitz 14 aufweist, womit ein mit dem Gehäuse 6 oder der Vorrichtung 1 verbundener Vorsprung oder Stift 15 übergriffen werden kann. Während der Rand 13 für die Zentrierung sorgt, kann mit Hilfe des Schlitzes 14 und des Vorsprunges oder Stiftes 15 die Drehfestigkeit bewirkt werden. Dabei könnte der Stift - exzentrisch zur Optik 12 - auch durch die gesamte Vorrichtung 6 verlaufen und an einem entgegengesetzten Ende mit einem zweiten, sich nach unten öffnenden Schlitz 14 des Randes 13 des Reflektors 8 zusammenwirken.

Der Abstand des Reflektors 8 von der Aufnahmestelle 4 ist im Ausführungsbeispiel durch einen ringförmigen Abstandhalter 16 festgelegt, der zwischen Reflektor 8 und Oberseite 13 des Gehäuses 6 angeordnet und insbesondere befestigt ist. Es könnte aber auch ein sonstiger Anschlag für den Reflektor 8 vorgesehen sein, der auch gegebenenfalls indirekt mit seinem Rand 13 zusammenwirkt. Anstelle eines an dem Reflektor im Bereich von dem Rand 13 ringartig angeordneten und umlaufenden Abstandhalters 16 könnten auch einzelne Abstandhalterstücke vorgesehen sein. Dabei ist besonders günstig, wenn dieser Abstandhalter 16 mit dem Reflektor 8 verbunden ist, so dass nach Abnahme des Reflektors die Oberseite 13 und die Aufnahmestelle 4 ungehindert für eine Reinigung zugänglich sind.

In den Fig.5 und 6 ist eine besonders zweckmäßige Ausgestaltung der Vorrichtungen 1 dargestellt, wobei dabei sowohl die Vorrichtung nach Fig.1 als auch die nach Fig.2 die Außenabmessung einer in ein Fotometer, Spektralfotometer, Fluorimeter oder Spektralfluorimeter passend einsetzbaren, von deren Licht beaufschlagbaren Küvette aufweisen. In Fig.5 und 6 erkennt man jeweils einen Aufnahmeschacht 17 eines derartigen Fotometers, Spektralfotometers, Fluorimeters oder Spektralfluorimeters, die jeweils nur stark schematisiert angedeutet sind. Dabei sind die im Inneren der Vorrichtung 1 angeordneten Einrichtungen 7 und 9 zur Lichtzuleitung oder Lichtumlenkung an der Stelle der Vorrichtung 1 angeordnet, an welcher bei üblichen Küvetten Eintritts- und Austrittsfenster für das zur Messung dienende Licht 3 vorgesehen sind, wobei die erste Einrichtung 7 zur Lichtumlenkung das von dem Fotometer oder dergleichen eingestrahlte Licht zu der Aufnahmefläche 4 umlenkt und die zweite Einrichtung 9 zur Lichtumlenkung das von der Messstelle und dem Reflektor zurückkommende Licht zu dem Detektor umlenkt.

Somit kann die bei entsprechender Abmessung der Vorrichtung 1 diese in bestehende Messgeräte eingesetzt werden, wodurch deren Anwendbarkeit vergrößert wird, weil sie dadurch geeignet sind, auch kleine und kleinste Mengen eines Mediums 2 zu untersuchen. Zweckmäßig ist es dabei, wenn das Außenmaß des Querschnitts der Vorrichtung 1 dem einer Standardküvette entspricht und insbesondere 12,5 mm x 12,5 mm beträgt, weil die Mehrzahl von Fotometern oder dergleichen Messgeräte für derartige Abmessungen ausgebildet sind. Dabei kann der austretende Lichtstrahl mit dem eintretenden Lichtstrahl fluchten, wie es in den Fig.1 und 2 sowie in den Fig.5 und 6 dargestellt ist. Es ist aber auch möglich, dass der austretende Lichtstrahl mit dem eintretenden Lichtstrahl in einer etwa horizontalen Ebene einen rechten Winkel einschließt, was vor allem bei Fluorimetern zweckmäßig ist.

Es sei noch erwähnt, dass die Vorrichtung 1 zweckmäßiger Weise aus Glas oder Kunststoff besteht und im Bereich des Lichteintritts 5 als erste Einrichtung 7 zur Umlenkung ein Umlenkprisma oder ein Umlenkspiegel zu einem rechtwinklig zu dem Lichteintritt stehenden Schacht 18 oder Kanal für den Lichtleiter 10 und parallel dazu den weiteren Lichtleiter 11 mit einem an dessen Mündung angeordneten zweiten Umlenkprisma oder Umlenkspiegel hat, welchem ein Austrittsfenster für das Licht gegenüber liegt oder dieses Fenster bildet. Dabei verläuft auch der zweite Lichtleiter 11 in einem Schacht oder Kanal 18.

Die Vorrichtung 1 hat integrierte Strahlumlenkungen mit Hilfe von entsprechenden Einrichtungen 7 und 9 sowie faseroptische Lichtleiter 10 und 11 zum Führen des zur Analyse eines flüssigen Mediums 2 dienenden Lichts 3 beispielsweise in einem Spektralfotometer, Spektralfluorimeter oder einer ähnlichen Messvorrichtung zu der an der Vorrichtung 1 befindlichen, als Aufnahmefläche 4 für das Medium ausgebildeten Messstelle und von dieser zurück zu dem Detektor des Spektralfotometers, Spektralfluorimeters oder dergleichen. Dabei ist diese Aufnahmestelle 4 als Messstelle flächig an der Oberseite der Vorrichtung 1 vorgesehen und in Gebrauchsstellung durch einen deckelartigen lösbaren Reflektor 8 abgeschlossen, der auch die Probe beziehungsweise das Medium 2 abstandslos berührt und vor dem Aufbringen der Probe sowie zum Reinigen der Messstelle abgenommen werden kann.

## Patentansprüche

1. Vorrichtung (1) für die Analyse oder Absorptionsmessung an einem Tropfen, eines flüssigen Mediums (2) mit Hilfe von Licht (3), das durch das Medium (2) geführt ist und danach fotometrisch, spektralfotometrisch, fluorimetrisch oder spektralfluorimetrisch detektierbar oder analysierbar ist,
wobei die Vorrichtung (1) ein Gehäuse (6) umfasst und eine in Gebrauchsstellung obere flächige Aufnahmestelle (4) zum Aufbringen oder Auftropfen des Mediums (2) und einen oberhalb der Aufnahmestelle (4) lösbar anbringbaren Reflektor (8) aufweist, wobei der Reflektor (8) in seiner Gebrauchsstellung einen definierten Abstand von der Aufnahmestelle (4) hat, welcher zumindest im Bereich des Lichtdurchganges von dem Medium (2) ausgefüllt oder ausfüllbar ist,
wobei die Vorrichtung einen in Gebrauchsstellung horizontal orientierten, unterhalb der Aufnahmestelle (4) befindlichen Lichteintritt (5) in ihr Gehäuse (6) und eine im Strahlengang hinter dem Lichteintritt (5) befindliche erste Einrichtung (7) zur Umlenkung des Lichts nach oben zu der Aufnahmestelle (4) aufweist,
**dadurch gekennzeichnet, dass** eine zweite Einrichtung (9) zum Umlenken des von dem Reflektor (8) kommenden Lichts zu einem Detektor vorgesehen ist, und dass die Aufnahmestelle (4) eine flächige Vertiefung an der Oberseite (13) des Gehäuses (16) der Vorrichtung (1) unterhalb des Reflektors (8) ist,
der Reflektor (8) ein Spiegel oder ein reflektierendes Prisma ist und die Probe des Mediums (2) in Gebrauchsstellung abstandslos berührt, und
die Vorrichtung (1) die Außenabmessung einer in ein Fotometer, Spektralfotometer, Fluorimeter oder Spektralfluorimeter passend einsetzbaren, von deren Licht beaufschlagbaren Küvette aufweist und dass die in dem Inneren der Vorrichtung (1) angeordneten Einrichtungen (7, 9) zur Lichtzuleitung oder Lichtumlenkung an der Stelle der Vorrichtung (1) angeordnet sind, an welcher bei üblichen Küvetten Eintritts- und Austrittsfenster für das zur Messung dienende Licht (3) vorgesehen sind, wobei die erste Einrichtung (7) zur Lichtumlenkung das von dem Fotometer oder dergleichen eingestrahlte Licht zu der Aufnahmefläche (4) umlenkt und die zweite Einrichtung (9) zur Lichtumlenkung das von der Messstelle zurückkommende Licht zu dem Detektor umlenkt.

2. Vorrichtung nach Anspruch 1, **dadurch gekennzeichnet, dass** die Aufnahmestelle (4) als Fläche von oben zugänglich ist und das zu untersuchende Medium (2) durch die Schwerkraft auf der Aufnahmestelle (4) festlegbar oder gehalten ist.

3. Vorrichtung nach Anspruch 1 oder 2, **dadurch gekennzeichnet, dass** die Aufnahmestelle (4) so groß bemessen ist, dass das durch sie hindurch zu dem Reflektor (8) verlaufende und von diesem zurückgeworfene Licht (3) wenigstens einmal, insbesondere zweimal durch die Aufnahmestelle (4) und/oder durch das Medium (2) geführt ist.

4. Vorrichtung nach einem der Ansprüche 1 bis 3, **dadurch gekennzeichnet, dass** von der ersten Einrichtung (7) zur Umlenkung des Lichts zu der Aufnahmestelle (4) hin ein Lichtleiter oder lichtleitendes Faserbündel (10) und insbesondere zwischen der Aufnahmestelle (4) und der zweiten Einrichtung (9) zum Umlenken des von dem Reflektor (8) und der Probe kommenden Lichts ein Lichtleiter oder ein das Licht leitendes Faserbündel (11) angeordnet sind.

5. Vorrichtung nach einem der Ansprüche 1 bis 4, **dadurch gekennzeichnet, dass** unterhalb der Aufnahmestelle (4) für das Medium (2) eine das Licht bündelnde Optik (12), zumindest eine Sammellinse, vorgesehen ist, die mit dem/den Lichtleitern (10, 11) optisch gekoppelt ist.

6. Vorrichtung nach einem der Ansprüche 1 bis 5, **dadurch gekennzeichnet, dass** eine der Aufnahmestelle zugewandte Begrenzung durch eine Optik oder Linse (12) oder durch dort endende Lichtleiter (10, 11) gebildet ist, wobei die Linse oder Optik (12) und/oder die Enden der Lichtleiter (10, 11) gegenüber der Oberseite (13) der Halterung für die Linse oder Optik (12) oder die Lichtleiter zurückversetzt sind.

7. Vorrichtung nach einem der Ansprüche 1 bis 6, **dadurch gekennzeichnet, dass** die mit den Lichtleitern (10, 11) gekoppelte Linse oder Optik (12) gleichzeitig als Abschlussfenster der Vorrichtung (1) ausgebildet ist, auf welches die zu untersuchende Probe des Mediums (2) auftropfbar ist.

8. Vorrichtung nach einem der Ansprüche 1 bis 7, **dadurch gekennzeichnet, dass** die Messstrecke durch die Probe doppelt so groß wie der Abstand der Aufnahmefläche (4) von der Oberfläche des Reflektors (8) ist und das Licht diesen Abstand zweimal durchläuft.

9. Vorrichtung nach einem der Ansprüche 1 bis 8, **dadurch gekennzeichnet, dass** der lösbar aufsetzbare oder anbringbare Reflektor (8) gegenüber der Vorrichtung (1) und ihrem Gehäuse (6) in Gebrauchsstellung drehfest gehalten und zentriert ist.

10. Vorrichtung nach einem der Ansprüche 1 bis 9, **dadurch gekennzeichnet, dass** der Abstand des Reflektors (8) von der Aufnahmestelle (4) durch wenigstens einen Abstandhalter (16) zwischen Reflektor (8) und Gehäuse (6) oder einen Anschlag festgelegt ist.

11. Vorrichtung nach einem der Ansprüche 1 bis 10, **dadurch gekennzeichnet, dass** sie aus Glas oder Kunststoff besteht und im Bereich des Lichteintritts (5) als erste Einrichtung (7) zur Umlenkung ein Umlenkprisma oder einen Umlenkspiegel zu einem rechtwinklig zum Lichteintritt stehenden Schacht (18) oder Kanal für einen Lichtleiter (10) und parallel dazu den weiteren Lichtleiter (11) mit einem an dessen Mündung angeordneten zweiten Umlenkprisma oder Umlenkspiegel hat, welchem ein Austrittsfenster für das Licht gegenüber liegt oder dieses Fenster bildet.

12. Vorrichtung nach einem der Ansprüche 1 bis 11, **dadurch gekennzeichnet, dass** das Außenmaß des Querschnitts der Vorrichtung (1) dem einer Standard-Küvette entspricht und insbesondere 12,5 mm x 12,5 mm beträgt.

13. Vorrichtung nach einem der Ansprüche 1 bis 12, **dadurch gekennzeichnet, dass** der austretende Lichtstrahl mit dem eintretenden Lichtstrahl fluchtet oder mit diesem einen rechten Winkel einschließt.

## Claims

1. Device (1) for the analysis or absorption measurement of a drop of a liquid medium (2) with the aid of light (3) which is guided through the medium (2) and is then photometrically, spectrophotometrically, fluorimetrically or spectrofluorimetrically detectable or analysable, wherein the device (1) comprises a housing (6) and a receiving point (4) on the upper surface in the position of use onto which the medium (2) is applied or dropped and a reflector (8) attachable detachably above the receiving point (4), wherein in its position of use the reflector (8) is spaced at a defined distance from the receiving point (4) which is or can be filled, at least in the region of the light passage, by the medium (2),
wherein the device has a light entry (5) in its housing (6), oriented horizontally in the position of use, located beneath the receiving point (4) and a first device (7), located in the beam path behind the light entry (5), for deflecting the light upwards to the receiving point (4),
**characterised in that** a second device (9) for deflecting the light coming from the reflector (8) to a detector is provided, and that the receiving point (4) is a planar depression on the upper side (13) of the housing (16) of the device (1) underneath the reflector (8),
the reflector (8) is a mirror or a reflective prism and in the position of use touches the sample of the medium (2) without any gap, and the device (1) has the outer dimension of a cuvette which can be fitted into a photometer, spectrophotometer, fluorimeter or spectrofluorimeter and subjected to the light therefrom, and that the light guidance or light deflecting devices (7, 9) arranged in the interior of the device (1) are arranged in the location on the device (1) at which entry and exit windows for the light (3) used for measurement are provided in usual cuvettes, wherein the first light deflecting device (7) deflects the light beamed in by the photometer or the like onto the receiving surface (4) and the second light deflecting device (9) deflects the light returning from the measuring location to the detector.

2. Device according to claim 1, **characterised in that** the receiving point (4) as a surface is accessible from above and the medium (2) to be examined can be contained or held on the receiving point (4) through the force of gravity.

3. Device according to claim 1 or 2, **characterised in that** the dimensions of the receiving point (4) are so large that the light (3) passing through it to the reflector (8) and reflected back therefrom is guided at least once, in particular twice through the receiving point (4) and/or through the medium (2).

4. Device according to one of the claims 1 to 3, **characterised in that** a light guide or light-guiding fibre bundle (10) is arranged from the first device (7) for deflecting the light up to the receiving point (4) and in particular a light guide or light-guiding fibre bundle (11) is arranged between the receiving point (4) and the second device (9) for deflecting the light coming from the reflector (8) and the sample.

5. Device according to one of the claims 1 to 4, **characterised in that** an optical device (12) bundling the light, at least one converging lens, is provided beneath the receiving point (4) for the medium (2) which is coupled optically with the light guide(s) (10, 11).

6. Device according to one of the claims 1 to 5, **characterised in that** a delimitation facing the receiving point is formed by an optical device or lens (12) or by light guides (10, 11) ending there, wherein the lens or optical device (12) and/or the ends of the light guides (10, 11) are recessed in relation to the upper side (13) of the mounting for the lens or optical device (12) or the light guides.

7. Device according to one of the claims 1 to 6, **characterised in that** the lens or optical device (12) coupled with the light guides (10, 11) is simultaneously configured as a boundary window of the device (1) onto which the sample of the medium (2) which is to be examined can be dropped.

8. Device according to one of the claims 1 to 7, **characterised in that** the measuring path through the sample is twice as long as the distance of the receiving surface (4) from the surface of the reflector (8) and the light passes through this distance twice.

9. Device according to one of the claims 1 to 8, **characterised in that** the detachably placeable or attachable reflector (8) is held non-rotatably and centred in relation to the device (1) and its housing (6) in the position of use.

10. Device according to one of the claims 1 to 9, **characterised in that** the distance of the reflector (8) from the receiving point (4) is defined through at least one spacer (16) between reflector (8) and housing (6) or by a stop.

11. Device according to one of the claims 1 to 10, **characterised in that** it consists of glass or plastic and has in the region of the light entry (5), as first deflecting device (7), a deflecting prism or a deflecting mirror to a shaft (18) or channel for a light guide (10), oriented at right angles to the light entry, and parallel to this the further light guide (11) with a second deflecting prism or deflecting mirror arranged at its output which is located opposite an exit window for the light or forms this window.

12. Device according to one of the claims 1 to 11, **characterised in that** the dimension of the cross section of the device (1) corresponds to that of a standard cuvette and is in particular 12.5 mm x 12.5 mm.

13. Device according to one of the claims 1 to 12, **characterised in that** the issuing light beam is aligned with the entering light beam or forms a right angle with this.

## Revendications

1. Dispositif (1) pour l'analyse ou la mesure d'absorption concernant une goutte, d'une substance (2) liquide à l'aide de lumière (3), guidée à travers la substance (2) et susceptible ensuite d'être détecté ou analysé de manière photométrique, spectrophotométrique, fluorimétrique ou spectrofluorimétrique,
le dispositif (1) comprenant un boîtier (6) et présentant un emplacement de réception (4) supérieur plat dans la position d'utilisation, pour appliquer ou faire arriver sous forme de goutte la substance (2), et un réflecteur (8), susceptible d'être monté de manière amovible au-dessus de l'emplacement de réception (4), le réflecteur (8), dans sa position d'utilisation, étant disposé selon un espacement défini de l'emplacement de réception (4), rempli ou susceptible d'être rempli par la substance (2), au moins dans la zone de passage de lumière,
le dispositif présentant une entrée de lumière (5) entrant dans son boîtier (6), orientée horizontalement en position d'utilisation, se trouvant au-dessous de l'emplacement de réception (4), et un premier élément (7), se trouvant derrière l'entrée de lumière (5) dans le trajet des rayons, pour dévier la lumière vers le haut, vers l'emplacement de réception (4),
**caractérisé en ce qu'**un deuxième élément (9) est prévu pour dévier la lumière venant du réflecteur (8) vers un détecteur, et **en ce que** l'emplacement de réception (4) est une cavité plate sur la face supérieure (13) du boîtier (16) du dispositif (1), au-dessous du réflecteur (8),
le réflecteur (8) est un miroir ou un prisme réfléchissant et en position d'utilisation, est en contact sans espacement avec l'échantillon de la substance (2), et
le dispositif (1) présente les dimensions extérieures d'une cuvette susceptible d'être insérée dans un photomètre, spectrophotomètre, fluorimètre ou spectrofluorimètre, susceptible d'être exposée à leur lumière, et **en ce que** les éléments (7, 9) disposés à l'intérieur du dispositif (1) sont disposés pour l'amenée de lumière ou la déviation de lumière à l'emplacement du dispositif (1) auquel, pour des cuvettes usuelles, des fenêtres d'entrée et de sortie sont prévues pour la lumière (3) servant à la mesure, le premier élément (7) prévu pour la déviation de la lumière déviant vers la surface de réception (4) la lumière introduite par le photomètre ou analogue, et le deuxième élément (9) prévu pour la déviation de la lumière, déviant vers le détecteur la lumière revenant de l'espacement de mesure.

2. Dispositif selon la revendication 1, **caractérisé en ce que** l'emplacement de déception (4) est accessible depuis le haut, en tant que surface, et la substance (2) à examiner est susceptible d'être fixée ou est maintenue sur l'emplacement de réception (4), par la force de gravité.

3. Dispositif selon la revendication 1 ou 2, **caractérisé en ce que** l'emplacement de réception (4) est de dimension si grande que la lumière (3) passant par celui-ci et allant au réflecteur (8) et réfléchie par celui-ci est guidée au moins une fois, en particulier deux fois, par l'emplacement de réception (4) et/ou par la substance.

4. Dispositif selon l'une des revendications 1 à 3, **caractérisé en ce qu'**un guide de lumière ou un faisceau de fibres (10) guidant la lumière est disposé pour dévier la lumière du premier élément (7) vers l'emplacement de réception (4) et, en particulier un guide de lumière ou un faisceau de fibres (11) guidant la lumière est disposé entre l'emplacement de réception (4) et le deuxième élément (9) pour dévier la lumière venant du réflecteur (8) et de l'échantillon.

5. Dispositif selon l'une des revendications 1 à 4, **caractérisé en ce qu'**une optique (12) focalisant la lumière, au moins une lentille convergente, couplée optiquement au/aux guide(s) de lumière (10, 11) est prévue au-dessous de l'emplacement de réception (4), pour la substance (2).

6. Dispositif selon l'une des revendications 1 à 5, **caractérisé en ce qu'**une délimitation, tournée vers l'emplacement de réception, est formée par une optique ou lentille (12), ou par des guides de lumière (10, 11) s'y achevant, la lentille ou optique (12) et/ou les extrémités des guides de lumière (10, 11) étant en retrait par rapport à la face supérieure (13) de la fixation pour la lentille ou l'optique (12) ou les guides de lumière.

7. Dispositif selon l'une des revendications 1 à 6, **caractérisé en ce que** la lentille ou optique (12), couplée aux guides de lumière (10, 11), est simultanément réalisée sous forme de fenêtre d'obturation du dispositif (1), sur laquelle l'échantillon à examiner de la substance (2) est susceptible d'être placé, sous forme de goutte.

8. Dispositif selon l'une des revendications 1 à 7, **caractérisé en ce que** la grandeur de la veine de mesure passant par l'échantillon est du double de l'espacement entre surface de réception (4) et surface du réflecteur (8), et la lumière parcourt à deux reprises cet espacement.

9. Dispositif selon l'une des revendications 1 à 8, **caractérisé en ce que**, en position d'utilisation, le réflecteur (8), susceptible d'être placé ou susceptible d'être monté de manière désolidarisable, est maintenu bloqué en rotation et centré par rapport au dispositif (1), dans son boîtier (6).

10. Dispositif selon l'une des revendications 1 à 9, **caractérisé en ce que** l'espacement entre réflecteur (8) et emplacement de réception (4) est déterminé par au moins un support d'espacement (16), entre réflecteur (8) et boîtier (6), ou une butée.

11. Dispositif selon l'une des revendication 1 à 10, **caractérisé en ce qu'**il est composé de verre ou de matière synthétique et, dans la zone de l'entrée de lumière (5), comprend, en tant que premier élément (7) servant à la déviation, un prisme de renvoi ou un miroir de renvoi vers un puits (18) ou canal, placé à angle droit par rapport à l'entrée de lumière, pour un guide de lumière (10) et, parallèlement à cela, pour l'autre guide de lumière (11), avec un deuxième prisme de renvoi, ou un miroir de renvoi, disposé à son embouchure, à l'opposé duquel une fenêtre de sortie pour la lumière est située ou qui forme cette fenêtre.

12. Dispositif selon l'une des revendications 1 à 11, **caractérisé en ce que** les dimensions extérieures de la section transversale du dispositif (1) correspondent à une cuvette standard et sont en particulier de 12,5 mm x 12,5 mm.

13. Dispositif selon l'une des revendications 1 à 12, **caractérisé en ce que** le rayon lumineux sortant est aligné avec le rayon lumineux entrant ou fait un angle droit avec celui-ci.
